# EUROPÄISCHE PATENTSCHRIFT

(11) **EP 1 374 738 B1**
(45) Veröffentlichungstag und Bekanntmachung des Hinweises auf die Patenterteilung: **13.04.2005**
(21) Anmeldenummer: 03011312.0
(22) Anmeldetag: 19.05.2003
(51) Int. Cl.: A47C 3/30

(54) **Möbelsäule**
Column for furniture
Colonne pour meubles

(30) Priorität: 18.06.2002 DE 10227201
(43) Veröffentlichungstag der Anmeldung: 02.01.2004
(73) Patentinhaber: Stabilus GmbH, 56070 Koblenz (DE)
(72) Erfinder: Enders, Stephan, 56072 Koblenz (DE); Maus, Holger, Dipl.-Ing., 56355 Bettendorf (DE)
(74) Vertreter: Klein, Thomas, Dipl.-Ing.

(56) Entgegenhaltungen:
- EP-A- 0 591 901
- US-A- 4 899 969

## Beschreibung

Die Erfindung bezieht sich auf eine Möbelsäule mit einem Standrohr und einer an einem Ende in das Standrohr eingesetzten Führungsbuchse, deren radial umlaufende innere Mantelfläche eine Führung für ein Tragrohr der Möbelsäule ist, wobei die Führungsbuchse ein radial inneres Führungsrohr aufweist, dessen Rohrdurchgang die Führung bildet, mit einem an einem Endbereich des Führungsrohres sich radial nach außen erstrekkenden Einsatzringbereich, der mit seiner radial umlaufenden äußeren Mantelfläche in das Standrohr eingesetzt ist, mit axial an den Einsatzringbereich sich anschließend einer Mehrzahl in Umfangsrichtung im Abstand zueinander angeordneten, sich radial von dem Führungsrohr nach außen erstreckenden Stegen der Führungsbuchse, deren radial äußere Stirnflächen an der Innenwand des Standrohres in Anlage sind und zwischen denen zu der dem Einsatzringbereich abgewandten Seite hin offene Kammern gebildet sind, wobei das Standrohr eine dessen äußere Mantelfläche vollständig bedeckende Farbbeschichtung aufweist.

Bei derartigen Standrohren bestehen die Probleme, daß bei einem Einsetzen der Führungsbuchse nach dem Aufbringen der Farbschicht, diese Farbschicht im Bereich der eingesetzten Führungsbuchse beschädigt wird.

Wird aber die Führungsbuchse vor dem Aufbringen der Farbschicht in das Standrohr eingesetzt, so können sich von Reinigungsvorgängen vor dem Lackieren Wasseransammlungen im Bereich der Stege in der Führungsbuchse festsetzen, die dann zu Produktionsstörungen oder zu einem späteren Zeitpunkt während der weiteren Verarbeitung der Möbelsäule sowie während des Gebrauchs des mit der Möbelsäule versehenen Möbelstücks zu Beschädigungen führen. Auch können derartige Flüssigkeitsrückstände zu Korrosion führen.

Aufgabe der Erfindung ist es daher, eine Möbelsäule der eingangs genannten Art zu schaffen, bei der in einfacher Weise Flüssigkeitsansammlungen, insbesondere Wasseransammlungen im Bereich der Führungsbuchse vermieden werden.

Diese Aufgabe wird erfindungsgemäß dadurch gelöst, daß von einigen oder allen Kammern durchgehende Öffnungen durch das Führungsrohr zum Inneren des Führungsrohres führen.

Da die zwischen den Stegen gebildeten Kammern mit dem Inneren des Führungsrohres verbunden sind, können Flüssigkeitsansammlungen nun durch die Öffnungen aus den Kammern in das Innere des Führungsrohres und von dort nach außen ablaufen.

Ein besonders gutes Ablaufen der Flüssigkeitsansammlungen wird erreicht, wenn die Öffnungen im dem dem Einsatzringbereich zugewandten Endbereich der Kammern angeordnet sind, da nun ein Auslaufen an beiden axialen Enden der Kammern möglich ist.

Zur gleichmäßigen Kraftaufnahme des Tragrohres im Standrohr, können die Stege gleichmäßig verteilt am Umfang des Führungsrohres angeordnet sein.

Das Führungsrohr kann im Einsatzringbereich an seiner inneren radial umlaufenden Mantelfläche sich axial erstreckende, zum Inneren des Führungsrohres hin offene Nuten aufweisen, die jeweils mit ihren einen Enden axial in den Bereich einer Kammer ragen und radial durch die Öffnungen mit diesen Kammern verbunden sind.

Münden dabei die Nuten mit ihren den Öffnungen abgewandten Enden an der freien Stirnseite des Einsatzringbereichs axial nach außen, so erfolgt über diese Nuten bei in das Möbelstück eingebauter Möbelsäule bei einer Verschiebung des Tragrohres im Standrohr ein Druckausgleich zwischen dem Innern des Standrohres und dem Außenbereich.

Besitzen die Nuten eine Tiefe, die gleich oder größer ist als die Wandstärke des Führungsrohres im Bereich der Kammern, so sind zwangsläufig in dem axialen Überdeckungsbereich von Nuten und Kammern die radial gerichteten Öffnungen gebildet, ohne gesondert hergestellt zu werden.

Zur besonderen Sicherung der Führungsbuchse im Standrohr, kann das den Stegen abgewandte axial freie Ende des Einsatzringbereichs mit dem freien Ende des Standrohres formschlüssig verbunden sein.

Dies ist in einfacher Weise dadurch möglich, daß das freie Ende des Einsatzringbereichs einen radial nach außen hervorstehenden Ringansatz aufweist, der von dem freien Endes des Standrohres umbördelt ist.

Zum sicher spielfreien Sitz kann die Führungsbuchse mit Preßpassung in das Standrohr eingesetzt sein.

Einfach herstellbar ist es, wenn die Führungsbuchse ein Spritzgußteil, insbesondere ein Kunststoffspritzgußteil ist. Dies insbesondere auch dann, die Nuten mit ihren den Öffnungen abgewandten Enden an der freien Stirnseite des Einsatzringbereichs axial nach außen münden. Dabei können die Nuten beim Spritzvorgang auf einfache Weise durch in das Spritzwerkzeug eingebrachte axiale Schieber erzeugt werden, so daß das Spritzwerkzeug kostengünstig ist und unproblematisch axial entformt werden kann.

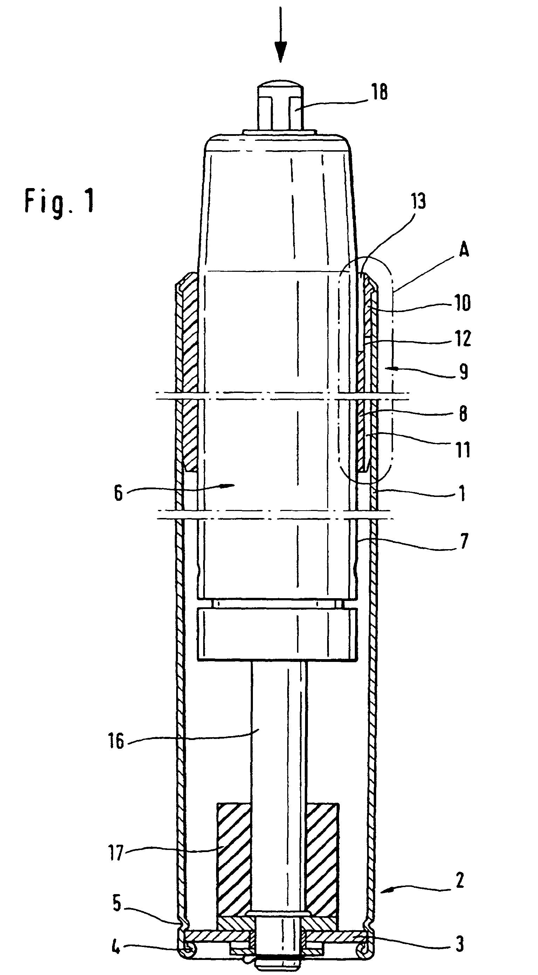

Ein Ausführungsbeispiel der Erfindung ist in der Zeichnung dargestellt und wird im folgenden näher beschrieben. Es zeigen
- Figur 1: eine Querschnittsansicht einer Möbelsäule
- Figur 2: eine Querschnittsansicht des Details "A" aus Figur 1

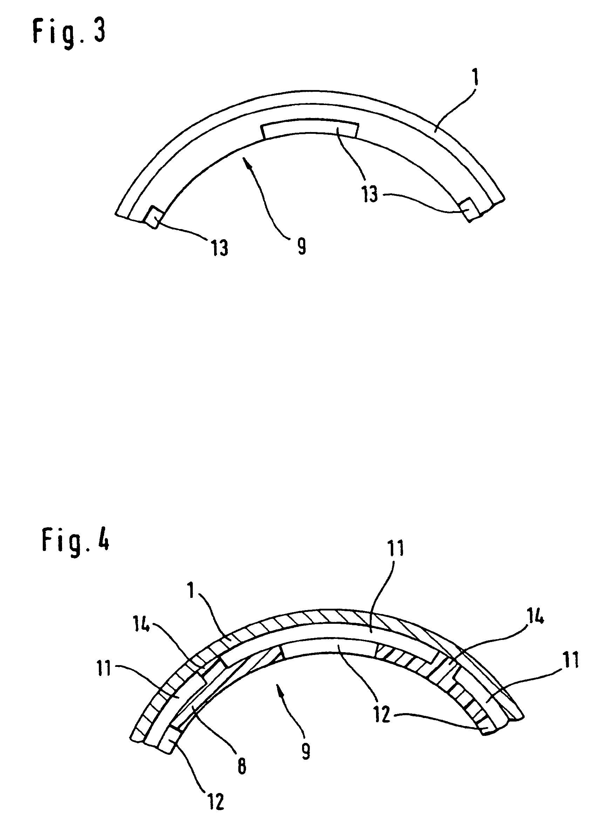

- Figur 3: eine stirnseitige Ansicht des Details "A" aus Figur 2
- Figur 4: einen Querschnitt entlang der Linie IV - IV in Figur 2.

Die in den Figuren dargestellte Möbelsäule für einen Stuhl weist ein Standrohr 1 mit einem Fußbereich 2 auf, an den nicht dargestellte Stuhlfüße anordenbar sind, die zum Stand auf einem Fußboden dienen.

In dem Standrohr ist im Fußbereich 2 ein Stützboden 3 mittels einer Umbördelung 4 des Standrohres und Einprägungen 5 des Standrohres 1 fest angeordnet.

Weiterhin ist in dem Standrohr 1 eine blockierbare Gasfeder 6 angeordnet, deren Tragrohr 7 gleitend in dem Rohrdurchgang eines Führungsrohres 8 einer Führungsbuchse 9 axial geführt ist. Das Führungsrohr 8 ist Teil der Führungsbuchse 9.

An einem Endbereich des Führungsrohres 8 besitzt die Führungsbuchse 9 einen radial nach außen sich erstreckenden Einsatzringbereich 10, der mit seiner radial äußeren Mantelfläche mit Preßpassung in das Standrohr 1 eingesetzt ist.

An dem Einsatzringbereich 10 schließen sich axial in das Standrohr 1 erstreckend eine Mehrzahl Stege 14 an, die in Umfangsrichtung mit Abstand zueinander gleichmäßig am Umfang des Führungsrohres 8 verteilt angeordnet sind, sich von dem Führungsrohr 8 radial nach außen erstrekken und mit ihren radial äußeren Stirnflächen an der Innenwand des Standrohres 1 in Anlage sind.

Zwischen den Stegen 14 sind zu der dem Einsatzringbereich 10 abgewandten Seite hin offene Kammern 11 gebildet.

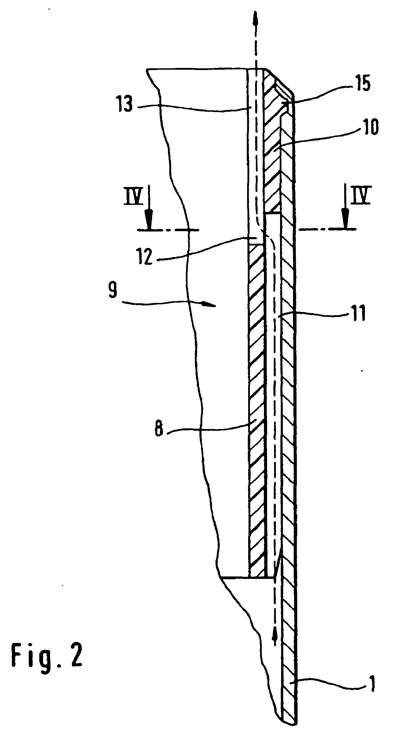

Wie insbesondere in Figur 2 zu sehen ist, führen von den Kammern 11 durchgehende Öffnungen 12 durch das Führungsrohr 8 radial nach innen zum Inneren des Führungsrohres 8.

Die Führungsbuchse 9 ist ein Spritzgußteil aus Kunststoff.

Die Öffnungen 12 sind in einfacher Weise dadurch erzeugt, daß in das Spritzwerkzeug axial sich erstreckende Schieber eingebracht sind, die sich vollständig axial durch den Bereich des zu erzeugenden Einsatzringbereichs bis zu dem dem Einsatzringbereich 10 benachbarten Bereich der Kammern 11 erstrecken und durch die Nuten 13 erzeugt werden. Diese Nuten 13 münden mit ihrem einen Ende an der freien Stirnseite des Einsatzringbereichs 10 axial nach außen und sind zum Inneren des Führungsrohres 8 hin offen. Da die Tiefe der Nuten 13 gleich der Wandstärke des Führungsrohres 8 ist, sind in dem sich überdeckenden Bereich von Nuten 13 und Kammern 11 zwangsläufig die radial gerichteten Öffnungen 12 gebildet und müssen nicht in einem separaten Arbeitsgang hergestellt werden.

Das den Stegen 14 abgewandte freie Ende des Einsatzringbereichs 10 weist einen radial nach außen hervorstehenden, umlaufenden Ringansatz 15 auf, der von dem freien Ende des Standrohres 1 umbördelt ist. Die äußere Mantelfläche des kompletten Standrohres 1 einschließlich auch den umbördelten Bereichs des Ringansatzes 15 ist mit einer Farbbeschichtung bedeckt.

Zu dem der Führungsbuchse 9 abgewandten Ende hin erstreckt sich eine Kolbenstange 16 der Gasfeder 6 und ist mit ihrem freien Ende an dem Stützboden 3 befestigt. An seinem an dem Stützboden 3 angrenzenden Ende ist die Kolbenstange 16 von einem als Puffer dienenden elastischen Anschlagring 17 umschlossen.

An dem aus dem Standrohr 1 herausragenden Ende der Gasfeder 6, an dem ein Sitz des Stuhles befestigbar ist, ragt ein Auslösestößel 18 aus der Gasfeder 6 heraus. Durch axiale Beaufschlagung dieses Auslösestößels 18 sind die durch einen Kolben der Kolbenstange 16 voneinander getrennten Kammern der Gasfeder 6 miteinander verbindbar und das Tragrohr 1 der Gasfeder 6 axial zum Standrohr 1 verschiebbar.

Durch die Verbindung des Innenraums des Standrohres 1 über die Nuten 13, die Öffnungen 12 und die Kammern 11 kommt es bei solchen Relativverschiebung von Standrohr 1 und Tragrohr 7 zu einem Druckausgleich mit der Umgebung.

### Bezugszeichenliste

- 1: Standrohr
- 2: Fußbereich
- 3: Stützboden
- 4: Umbördelung
- 5: Einprägungen
- 6: Gasfeder
- 7: Tragrohr
- 8: Führungsrohr
- 9: Führungsbuchse
- 10: Einsatzringbereich
- 11: Kammer
- 12: Öffnung
- 13: Nut
- 14: Steg
- 15: Ringansatz
- 16: Kolbenstange
- 17: Anschlagring
- 18: Auslösestößel

## Patentansprüche

1. Möbelsäule mit einem Standrohr und einer an einem Ende in das Standrohr eingesetzten Führungsbuchse, deren radial umlaufende innere Mantelfläche eine Führung für ein Tragrohr der Möbelsäule ist, wobei die Führungsbuchse ein radial inneres Führungsrohr aufweist, dessen Rohrdurchgang die Führung bildet, mit einem an einem Endbereich des Führungsrohres sich radial nach außen erstreckenden Einsatzringbereich, der mit seiner radial umlaufenden äußeren Mantelfläche in das Standrohr eingesetzt ist, mit axial an den Einsatzringbereich sich anschließend einer Mehrzahl in Umfangsrichtung im Abstand zueinander angeordneten, sich radial von dem Führungsrohr nach außen erstreckenden Stegen der Führungsbuchse, deren radial äußere Stirnflächen an der Innenwand des Standrohres in Anlage sind und zwischen denen zu der dem Einsatzringbereich abgewandten Seite hin offene Kammern gebildet sind, wobei das Standrohr eine dessen äußere Mantelfläche vollständig bedeckende Farbbeschichtung aufweist, **dadurch gekennzeichnet, daß** von einigen oder allen Kammern (11) durchgehende Öffnungen (12) durch das Führungsrohr (8) zum Inneren des Führungsrohres (8) führen.

2. Möbelsäule nach Anspruch 1, **dadurch gekennzeichnet, daß** die Öffnungen (12) im dem dem Einsatzringbereich (10) zugewandten Endbereich der Kammern (11) angeordnet sind.

3. Möbelsäule nach einem der vorhergehenden Ansprüche, **dadurch gekennzeichnet, daß** die Stege (14) gleichmäßig verteilt am Umfang des Führungsrohres (8) angeordnet sind.

4. Möbelsäule nach einem der vorhergehenden Ansprüche, **dadurch gekennzeichnet, daß** das Führungsrohr (8) im Einsatzringbereich (10) an seiner inneren radial umlaufenden Mantelfläche sich axial erstreckende, zum Inneren des Führungsrohres (8) hin offene Nuten (13) aufweist, die jeweils mit ihren einen Enden axial in den Bereich einer Kammer (11) ragen und radial durch die Öffnungen (12) mit diesen Kammern (11) verbunden sind.

5. Möbelsäule nach Anspruch 4, **dadurch gekennzeichnet, daß** die Nuten (13) mit ihren den Öffnungen (12) abgewandten Enden an der freien Stirnseite des Einsatzringbereichs (10) axial nach außen münden.

6. Möbelsäule nach einem der Ansprüche 4 und 5, **dadurch gekennzeichnet, daß** die Nuten (13) eine Tiefe besitzen, die gleich oder größer ist als die Wandstärke des Führungsrohres (8) im Bereich der Kammern (11).

7. Möbelsäule nach einem der vorhergehenden Ansprüche, **dadurch gekennzeichnet, daß** das den Stegen (14) abgewandte axial freie Ende des Einsatzringbereichs (10) mit dem freien Ende des Standrohres (1) formschlüssig verbunden ist.

8. Möbelsäule nach Anspruch 7, **dadurch gekennzeichnet, daß** das freie Ende des Einsatzringbereichs (10) einen radial nach außen hervorstehenden Ringansatz (15) aufweist, der von dem freien Ende des Standrohres (1) umbördelt ist.

9. Möbelsäule nach einem der vorhergehenden Ansprüche, **dadurch gekennzeichnet, daß** die Führungsbuchse (9) mit Preßpassung in das Standrohr (1) eingesetzt ist.

10. Möbelsäule nach einem der vorhergehenden Ansprüche, **dadurch gekennzeichnet, daß** die Führungsbuchse (9) ein Spritzgußteil, insbesondere ein Kunststoffspritzgußteil ist.

## Claims

1. Furniture pillar having an upright tube and a guide bushing which is inserted into the upright tube at one end and the radially encircling, inner circumferential surface of which is a guide for a supporting tube of the furniture pillar, the guide bushing having a radially inner guide tube, the tube passage of which forms the guide, having an annular insertion region which extends radially outwards on an end region of the guide tube and is inserted with its radially encircling, outer circumferential surface into the upright tube, and having a plurality of webs of the guide bushing, which webs adjoin the annular insertion region axially, are arranged at a distance from one another in the circumferential direction, extend radially outwards from the guide tube and the radially outer end surfaces of which bear against the inner wall of the upright tube and open chambers are formed between them towards the side facing away from the annular insertion region, the upright tube having a colour coating which completely covers its outer circumferential surface, **characterized in that** openings (12) passing through some or all of the chambers (11) lead through the guide tube (8) to the interior of the guide tube (8).

2. Furniture pillar according to Claim 1, **characterized in that** the openings (12) are arranged **in that** end region of the chambers (11) which faces the annular insertion region (10).

3. Furniture pillar according to one of the preceding claims, **characterized in that** the webs (14) are distributed uniformly on the circumference of the guide tube (8).

4. Furniture pillar according to one of the preceding claims, **characterized in that** the guide tube (8) has, in the annular insertion region (10) on its inner, radially encircling circumferential surface, axially extending grooves (13) which are open towards the interior of the guide tube (8), protrude in each case with their one end axially into the region of a chamber (11) and are connected to these chambers (11) radially by the openings (12).

5. Furniture pillar according to Claim 4, **characterized in that** those ends of the grooves (13) which face away from the openings (12) open axially outwards on the free end side of the annular insertion region (10).

6. Furniture pillar according to either of Claims 4 and 5, **characterized in that** the grooves (13) have a depth which is equal to or is larger than the wall thickness of the guide tube (8) in the region of the chambers (11).

7. Furniture pillar according to one of the preceding claims, **characterized in that** that axially free end of the annular insertion region (10) which faces away from the webs (14) is connected to the free end of the upright tube (1) in a form-fitting manner.

8. Furniture pillar according to Claim 7, **characterized in that** the free end of the annular insertion region (10) has an annular projection (15) which protrudes radially outwards and is crimped by the free end of the upright tube (1).

9. Furniture pillar according to one of the preceding claims, **characterized in that** the guide bushing (9) is inserted into the upright tube (1) with a press fit.

10. Furniture pillar according to one of the preceding claims, **characterized in that** the guide bushing (9) is an injection-moulded part, in particular a plastic injection-moulded part.

## Revendications

1. Colonne pour meuble, comportant une colonne montante et une douille de guidage enfoncée à une extrémité dans la colonne montante, dont la surface de manteau interne circonférentielle radiale constitue un dispositif de guidage pour un tube support, dans laquelle la douille de guidage présente un tube de guidage radial interne, dont le passage de tube forme le dispositif de guidage, avec une zone annulaire de placement s'étendant radialement vers l'extérieur à une zone d'extrémité du tube de guidage, laquelle zone est enfoncée dans la colonne montante par sa surface de manteau externe circonférentielle radiale, comportant, à proximité axiale de la zone annulaire de placement, une pluralité de nervures disposées à distance les unes des autres dans la direction circonférentielle, s'étendant radialement vers l'extérieur à partir du tube de guidage, dont les surfaces frontales extérieures radiales sont amenées sur la paroi interne de la colonne montante et entre lesquelles des chambres ouvertes allant vers le côté qui se détourne de la zone annulaire de placement sont formées, moyennant quoi la colonne montante présente sur sa surface de manteau externe un revêtement coloré qui la recouvre entièrement, **caractérisée en ce que** les ouvertures (12) passant de quelques ou de toutes les chambres (11) conduisent à travers le tube de guidage (8) à l'intérieur du tube de guidage (8).

2. Colonne pour meuble selon la revendication 1, **caractérisée en ce que** les ouvertures (12) sont disposées dans la zone d'extrémité des chambres (11) tournée vers la zone annulaire de placement (10).

3. Colonne pour meuble selon une des revendications précédentes, **caractérisée en ce que** les nervures (14) sont réparties régulièrement sur la circonférence du tube de guidage (8).

4. Colonne pour meuble selon une des revendications précédentes, **caractérisée en ce que** le tube de guidage (8) présente au niveau de la zone annulaire de placement (10) des rainures (13) s'étendant axialement sur sa surface de manteau circonférentielle radiale interne, allant vers l'intérieur du tube de guidage (8), lesquelles saillent respectivement par leurs extrémités libres axialement dans une chambre (11) et sont reliées radialement par les ouvertures (12) auxdites chambres (11).

5. Colonne pour meuble selon la revendication 4, **caractérisée en ce que** les rainures (13) débouchent par leurs extrémités qui se détournent des ouvertures (12) sur le côté frontal libre de la zone annulaire de placement (10) axialement vers l'extérieur.

6. Colonne pour meuble selon une des revendications 4 et 5, **caractérisée en ce que** les rainures (13) possèdent une profondeur, qui est égale ou supérieure à l'épaisseur de paroi du tube de guidage (8) au niveau des chambres (11).

7. Colonne pour meuble selon une des revendications précédentes, **caractérisée en ce que** l'extrémité libre de la zone annulaire de placement (10) qui se détourne axialement des nervures (14) est reliée par emboîtement à l'extrémité libre de la colonne montante (1).

8. Colonne pour meuble selon la revendication 7, **caractérisée en ce que** l'extrémité libre de la zone annulaire de placement (10) présente un épaulement annulaire (15) saillant radialement vers l'extérieur, lequel est bridé par l'extrémité libre de la colonne montante (1).

9. Colonne pour meuble selon une des revendications précédentes, **caractérisé en ce que** la douille de guidage (9) est enfoncée par ajustement avec serrage dans la colonne montante (1).

10. Colonne pour meuble selon une des revendications précédentes, **caractérisée en ce que** la douille de guidage (9) est une pièce moulée par injection, notamment une pièce en plastique moulée par injection.
